(19) Europäisches Patentamt
European Patent Office
Office européen des brevets

(11) **EP 3 173 750 B1**

(12) **EUROPÄISCHE PATENTSCHRIFT**

(45) Veröffentlichungstag und Bekanntmachung des Hinweises auf die Patenterteilung:
**16.10.2019 Patentblatt 2019/42**

(51) Int Cl.:
**G01F 23/284** *(2006.01)*     **G01S 13/88** *(2006.01)*
G01S 7/00 *(2006.01)*     G01S 7/40 *(2006.01)*

(21) Anmeldenummer: **15196609.0**

(22) Anmeldetag: **26.11.2015**

(54) **FÜLLSTANDMESSGERÄT UND VERFAHREN ZUR MESSUNG EINES FÜLLSTANDS**

FILL LEVEL MEASURING DEVICE AND METHOD FOR MEASURING A FILL LEVEL

APPAREIL DE MESURE DU NIVEAU DE REMPLISSAGE ET PROCÉDÉ DE MESURE D'UN NIVEAU DE REMPLISSAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**31.05.2017 Patentblatt 2017/22**

(73) Patentinhaber: **VEGA Grieshaber KG
77709 Wolfach (DE)**

(72) Erfinder:
• **Hoferer, Christian
77652 Offenburg (DE)**
• **Haas, Jürgen
77709 Oberwolfach (DE)**

(74) Vertreter: **Patentanwälte Bauer Vorberg Kayser Partnerschaft mbB
Goltsteinstraße 87
50968 Köln (DE)**

(56) Entgegenhaltungen:
WO-A1-96/10734     WO-A1-2009/134202
DE-A1-102006 019 191     US-A- 5 263 371
US-A1- 2009 282 892     US-A1- 2010 156 702

EP 3 173 750 B1

## Beschreibung

Die Erfindung betrifft ein Füllstandmessgerät und ein Verfahren zur Messung eines Füllstands zur Bestimmung von Füllständen in Behältern, auf Halden oder in Bunkern. Insbesondere betrifft die Erfindung ein auf dem Prinzip der Laufzeitmessung einer elektromagnetischen Welle basierendes Füllstandmessgerät mit mindestens einer Referenzstelle und ein Verfahren zur Messung eines Füllstands unter Bestimmung eines Korrekturfaktors für die Laufzeit des Messsignals.

Füllstandsmessungen, bei denen die Laufzeitmessung zwischen dem Aussenden einer elektromagnetischen Welle und dem Empfang einer Reflexion oder eines Echos derselben zur Bestimmung des Füllstands verwendet wird, sind aus dem Stand der Technik bekannt. Wesentlich für die Durchführung solcher Verfahren ist die Kenntnis der Ausbreitungsgeschwindigkeit der elektromagnetischen Welle. Im Vakuum ist diese Ausbreitungsgeschwindigkeit gegeben durch

$$c_0 = \frac{1}{\sqrt{\varepsilon_0 \mu_0}}$$

wobei $\varepsilon_0$ für die Permittivität des Vakuums und $\mu_0$ für die Permeabilität des Vakuums stehen. In einer anderen Atmosphäre wird sie durch deren Permittivität $\varepsilon_r$ und deren Permeabilität $\mu_r$ gemäß der Beziehung

$$c_{medium} = \frac{c_0}{\sqrt{\varepsilon_r \mu_r}}$$

verändert, insbesondere reduziert.

Diese Änderung der Ausbreitungsgeschwindigkeit der elektromagnetischen Welle beeinflusst insbesondere dann signifikant das Ergebnis von Füllstandsmessungen, wenn es zu einem Übertritt des zu messenden Mediums in die Atmosphäre, die von der elektromagnetischen Welle bis zur Reflexion an der Oberfläche des Mediums durchlaufen werden muss, kommt. Dies ist beispielsweise der Fall, wenn es zur Verdampfung von Teilen des zu messende Medium unter Hitzeeinwirkung kommt, wie dies zum Beispiel in verfahrenstechnischen Anlagen oft der Fall ist.

Um eine Korrektur dieses Effekts zu erreichen, hat es sich bewährt, an einer definierten, beispielsweise durch Kalibrationsmessungen bestimmten Position relativ zur Quelle der elektromagnetischen Welle eine Referenzstelle anzuordnen, an der ein Teil der das Messsignal bildenden elektromagnetischen Welle reflektiert wird und auch die Laufzeit dieser Reflexion zu bestimmen. Dies ermöglicht eine Laufzeitkorrektur, denn aus der bekannten Laufzeit und der bekannten Position der Referenzstelle lässt sich die Ausbreitungsgeschwindigkeit der elektromagnetischen Welle unter den jeweils gerade vorliegenden Atmosphärenbedingungen ermitteln, die dann zur Bestimmung des korrekten Füllstands, beispielsweise durch Anwendung eines entsprechenden Korrekturfaktors, verwendet werden kann.

Ein solches Füllstandmessgerät und ein Verfahren zur Füllstandmessung mit einem solchen Füllstandmessgerät, die nach einem solchen Prinzip arbeiten, ist beispielsweise aus der WO 2010/071564 bekannt.

Aus der US 2009/0282892 A1 sind ein Verfahren und eine Vorrichtung zur Kalibrierung eines Füllstandsmessgerätes für einen Flüssigkeitstank bekannt, bei dem ein Signal, dass die Reflexion einer elektromagnetischen Welle von einer Flüssigkeit und Referenzpins in einem Lagertank ableitet, dabei werden eine gemessene Entfernung zur Flüssigkeit und ein oder mehr gemessene Abstände zu den Pins aus dem Signal berechnet und die gemessenen Abstände der Pins werden mit Referenzabständen verglichen. Ein Korrekturfaktor wird basierend auf diesem Vergleich berechnet und zur Berechnung eines korrigierten Abstands zu der Flüssigkeit verwendet.

In der Praxis zeigt sich aber, dass die unter Verwendung von auf diese Weise ermittelten Korrekturfaktoren bestimmten Füllstände noch praxisrelevante Abweichungen vom tatsächlichen Füllstand aufweisen können. Die Aufgabe der Erfindung besteht daher darin, ein Füllstandmessgerät und ein Verfahren zur Messung eines Füllstands anzugeben, die eine verbesserte Füllstandbestimmung erlauben.

Diese Aufgabe wird gelöst durch ein Füllstandmessgerät mit den Merkmalen des Patentanspruchs 1 und ein Verfahren zur Messung eines Füllstands mit den Merkmalen des Anspruchs 2.

Das erfindungsgemäße Füllstandmessgerät zur Messung eines Füllstands eines Mediums in Anwesenheit einer die Laufzeit elektromagnetischer Wellen beeinflussenden Atmosphäre mittels einer elektromagnetischen Welle nach einem Laufzeitprinzip umfasst in üblicher Weise eine Auswerteeinheit zur Bestimmung eines Füllstands aus den gemessenen Laufzeitwerten, eine Sende- und Empfangseinheit zum Senden und Empfangen elektromagnetischer Wellen, die insbesondere so eingerichtet ist, dass zumindest im Zusammenwirken mit der Auswerteeinheit die Laufzeiten der Elektromagnetischen Wellen zwischen Senden und Empfangen registriert werden, und mindestens eine Messsonde sowie mindestens zwei Referenzstellen aus Materialien mit unterschiedlichen Ausdehnungskoeffizienten, die üblicherweise an der Messsonde angeordnet sind. Dabei können grundsätzlich Sender und Empfänger der Sende- und Empfangseinheit auch räumlich getrennt auf zwei unterschiedlichen Elektronikmodulen angeordnet werden, und die Auswerteeinheit kann in die Sende- und Empfangseinheit integriert sein.

Erfindungswesentlich ist, dass die Auswerteeinheit so eingerichtet ist, dass sie bei der Verarbeitung der Laufzeit eines an den Referenzstellen reflektierten Signals eine Änderung der Geometrien der Referenzstellen in Abhängigkeit von den Umgebungsbedingungen berücksichtigt. Erfindungsgemäße Umgebungsbedingung ist die Temperatur, da bei einer Veränderung der Umgebungstemperatur insbesondere bei hohen Temperaturen ein Übertritt von Fluid in die Atmosphäre erfolgen kann, der eine Reduktion der Ausbreitungsgeschwindigkeit der elektromagnetischen Welle mit sich bringt und zugleich bei vielen Materialien eine signifikante temperaturbedingte Ausdehnung mit sich bringen.

Vorteilhaft weist das Füllstandmessgerät ferner ein Speichermodul auf, auf das die Auswerteeinheit zugreifen kann. Darunter ist neben einem eigenen, separaten Speicher auch ein Speicherbereich in einem ohnehin für andere Zwecke vorhandenen Speicher gemeint, sofern die Auswerteeinheit zumindest Lese-Zugriffsrechte auf diesen Speicherbereich hat. Dieses Speichermodul kann auf unterschiedliche Weise genutzt werden, um dort Daten zu hinterlegen, die eine Korrektur der Auswirkungen der Umgebungsbedingungen, insbesondere der Temperatur, auf die Geometrie der Referenzstelle, durch die Auswerteeinheit erfolgen kann.

Vorteilhaft kann es ferner sein, wenn das Füllstandmessgerät einen Sensor für die Umgebungsbedingung aufweist, der mittelbar -beispielsweise unter Zwischenschaltung eines W-Lan-Moduls oder einer Auswerteelektronik, die die Daten des Sensors aufbereitet- oder unmittelbar in Signalkommunikation mit der Auswerteeinheit steht. Dies kann insbesondere ein Temperatursensor sein. Sind ein Speichermodul und ein Sensor für die Umgebungsbedingung vorhanden, so kann man in dem Speichermodul Korrekturfaktoren für die Änderung der Geometrie der Referenzstelle in Abhängigkeit von den Umgebungsbedingungen hinterlegen, z.B. wenn es um die Umgebungsbedingung Temperatur geht thermische Ausdehnungskoeffizienten des Sondenmaterials oder der Sondenmaterialien oder durch Anwendung dieser Werte auf die vorhandene Grundgeometrie der Referenzstelle bereits im Vorfeld berechnete Korrekturwerte. Dann muss nur noch auf den zu dem durch den Sensor gemessenen Wert der Umgebungsbedingung gehörende Korrekturwert zugegriffen und dieser bei der Füllstandermittlung aus den Signallaufzeiten berücksichtigt werden.

Diese einfache Möglichkeit zur Bestimmung der anzuwendenden Korrekturen zur Berücksichtigung der geometrischen Änderung der Messstellen als Funktion der Umgebungsbedingungen setzt aber voraus, dass es möglich ist, den Sensor so zu installieren, dass er tatsächlich in guter Näherung die Umgebungsbedingungen, denen die Referenzstelle ausgesetzt ist, erfasst, was nicht immer zu erreichen ist.

Es ist aber auch bei Füllstandmessgeräten ohne einen solchen Sensor für die Umgebungsbedingungen möglich, den Korrekturfaktor zu bestimmen, was allerdings komplexere Berechnungen erfordert, die durch die Auswerteelektronik geleistet werden müssen. Eine erste Möglichkeit dazu besteht darin, dass in dem Speicher Daten zu Eigenschaftsänderungen der Atmosphäre in Abhängigkeit von den Umgebungsbedingungen hinterlegt sind und dass die Auswerteeinheit eingerichtet ist, um aus der Laufzeitänderung zwischen Anfangsecho der Referenzstelle und Endeecho der Referenzstelle durch Lösung eines Gleichungssystems mit mindestens einer Gleichung einen Wert für die aktuell vorliegende Umgebungsbedingung zu ermitteln und eine darauf basierende Korrektur für die Füllstandmessung durchzuführen, egal ob mit oder ohne Einbeziehung der Laufzeitänderung des Echos der Oberfläche des Mediums. Ein nicht-erfindungsgemäßes Beispiel, wie dies praktisch realisiert werden kann, ist weiter unten als "Algorithmus 2" beschrieben.

Da das Füllstandmessgerät erfindungsgemäß eine Messsonde mindestens zwei Referenzstellen aufweist, die aus Materialien mit unterschiedlichen Ausdehnungskoeffizienten in Abhängigkeit von den Umgebungsbedingungen bestehen, kann auch ohne dass ein genaues Modell der Atmosphäre und ihrer Reaktion auf die Umgebungsbedingungen bekannt sein müssen eine zweite Möglichkeit zur Bestimmung des anzuwendenden Korrekturfaktors realisiert werden. Dazu ist es nötig, die Auswerteeinheit so einzurichten, dass sie aus den gemessenen Änderungen der Laufzeit zwischen Anfangsecho und Endeecho der mindestens zwei Messtellen durch Lösung eines Gleichungssystems einen Wert für die aktuell vorliegende Umgebungsbedingung zu ermittelt und eine darauf basierende Korrektur für die Füllstandmessung durchführt. Ein konkretes Beispiel, wie dies praktisch realisiert werden kann, ist weiter unten als "Algorithmus 1" beschrieben.

Das erfindungsgemäße Verfahren zur Füllstandmessung mit einem solchen Füllstandmessgerät weist die im unabhängigen Anspruch spezifizierten -zweckmäßigerweise in der angegebenen Reihenfolge abzuarbeitenden- Schritte auf.

Erfindungswesentlich für das erfindungsgemäße Verfahren ist, dass bei der Bestimmung des zu berücksichtigenden Korrekturfaktors der Einfluss einer Änderung der Geometrien der Referenzstellen in Abhängigkeit von der Umgebungstemperatur berücksichtigt wird.

Eine erste Möglichkeit, diese Berücksichtigung zu realisieren besteht darin, dass zur Bestimmung der Änderung der Geometrien der Referenzstellen in Abhängigkeit von den Umgebungsbedingungen eine Messung der aktuell vorliegenden Umgebungsbedingung durchgeführt wird und ein in einem Speicher hinterlegter Korrekturfaktor angewendet wird.

In einer alternativen Möglichkeit wird die Berücksichtigung dadurch realisiert, dass in einem Speicher Daten zu Eigenschaftsänderungen der Atmosphäre in Abhängigkeit von den Umgebungsbedingungen hinterlegt sind und dass aus der Laufzeitänderung zwischen dem registrierten Anfangsecho und dem registrierten Endeecho der Referenzstelle und optional auch der Laufzeitänderung des Echos der Oberfläche des Mediums durch Lösung eines Gleichungssystems mit mindestens einer Gleichung einen Wert für die aktuell vorliegende Umgebungsbedingung ermittelt wird und eine darauf basierende Korrektur für die Füllstandmessung durchgeführt wird. Eine exemplarische nicht-erfindungsgemäße Umsetzungsmöglichkeit hierfür ist unten als "Algorithmus 2" erläutert.

Gemäß der erfindungsgemäßen Ausgestaltung des Verfahrens ist vorgesehen, dass zur Bestimmung der Änderung der Geometrie der Referenzstelle in Abhängigkeit von den Umgebungsbedingungen die jeweiligen Anfangs- und Endeechos von mindestens zwei Referenzstellen, deren Geometrie sich unterschiedlich in Abhängigkeit von den Umgebungsbedingungen ändert, empfangen und die Laufzeiten dieser Anfangs- und Endeechos registriert werden und dass aus diesen Laufzeiten durch Lösung eines Gleichungssystems ein Wert für die aktuell vorliegende Umgebungsbedingung ermittelt und eine darauf basierende Korrektur für die Füllstandmessung durchgeführt wird. Eine exemplarische konkrete Umsetzungsmöglichkeit hierfür ist unten als "Algorithmus 1" erläutert.

Die Erfindung wird nachfolgend anhand von Figuren, die Ausführungsbeispiele zeigen, näher erläutert. Insbesondere wird dabei detailliert auf Füllstandmessgeräte, die zur Füllstandmessung das an sich bekannte "Time Domain Reflectometry" (fortan kurz: TDR)-Prinzip mit geführten Mikrowellen einsetzen, eingegangen. Dabei wird ein Mikrowellenimpuls entlang einer Messsonde ausgesendet und durch Detektion der Reflexionen der Impulse an Objekten und Grenzflächen eine Abstandsmessung ermöglicht, da die Laufzeit des Impulses dem Abstand zur Oberfläche des Mediums proportional ist. Die Erfindung ist aber nicht auf diese spezielle Art von Messgeräten bzw. ihren Betrieb beschränkt, sondern kann in analoger Weise bei allen Füllstandmessgeräten, deren Füllstandsensoren nach dem Laufzeitprinzip arbeiten, angewandt werden. Ferner wird als exemplarische Umgebungsbedingung die Temperatur berücksichtigt, da diese Umgebungsbedingung eine besonders hohe Praxisrelevanz hat.

Es zeigen:

Fig. 1: eine schematische Darstellung eines an einem Behälter angeordneten Füllstandmessgeräts,

Fig. 2: die relative Permittivität von gesättigtem Wasserdampf in Abhängigkeit von der Temperatur,

Fig. 3: einen Korrekturfaktor in Abhängigkeit von der Temperatur, der auf das Ergebnis einer Laufzeitmessung in einer gesättigten Wasserdampf-Atmosphäre anzuwenden ist,

Fig. 4: ein Ausführungsbeispiel für ein Füllstandmessgerät mit einer alternativen Ausgestaltung der Messsonde,

Fig. 5: ein Ausführungsbeispiel für ein Füllstandsmessgerät mit einer anderen alternativen Ausgestaltung der Messsonde,

Fig. 6a: eine schematische Darstellung einer mit dem in Figur 4 dargestellten Füllstandmessgerät bei einer ersten Temperatur gemessenen Echokurve, und

Fig. 6b: eine schematische Darstellung einer mit dem in Figur 4 dargestellten Füllstandmessgerät bei einer zweiten, gegenüber der ersten Temperatur erhöhten Temperatur gemessenen Echokurve.

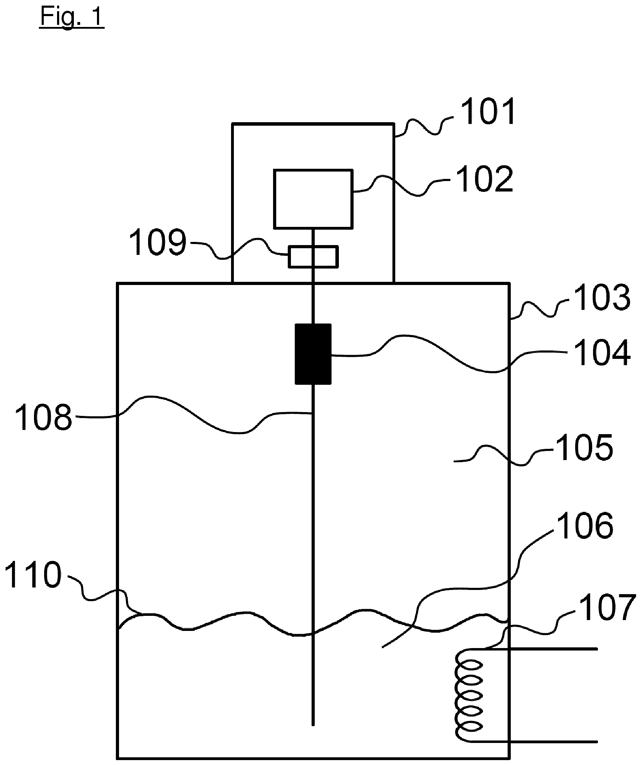

Das in Figur 1 dargestellte Füllstandmessgerät 101 weist eine Auswerteeinheit 102, eine Sende- und Empfangseinheit 109 zum Senden und Empfangen elektromagnetischer Wellen, insbesondere von Mikrowellen, mindestens eine Messsonde 108 und mindestens eine, typischerweise an der Messsonde 108 angeordnete oder in diese integrierte, Referenzstelle 104 auf. Grundsätzlich ist es dabei möglich, die Auswerteeinheit 102 und die Sende- und Empfangseinheit 109 miteinander integriert auszubilden.

Zur Erläuterung der Funktionsweise des Füllstandmessgeräts 101 ist dieses an einem Behälter 103 angeordnet, in dem sich ein Medium 106, z.B. eine Flüssigkeit befindet, deren Füllstand gemessen werden soll. Die Oberfläche 110 dieses Mediums 106 ist übertrieben wellig dargestellt, um zu suggerieren, dass es sich um die Oberfläche einer Flüssigkeit handelt. Durch die schematisch dargestellte Heizung 107 wird angedeutet, dass das Medium 106 erwärmt sein kann. Liegt ein erwärmtes Medium 106 vor, bringt dies insbesondere mit sich, dass in Abhängigkeit von der Temperatur des Mediums 106 die Atmosphäre 105 oberhalb des Mediums unterschiedliche Eigenschaften und insbesondere relative Permittivitäten aufweisen kann, die von der des Vakuums empfindlich abweichen, was, wie oben erläutert, Einfluss auf die Ausbreitungsgeschwindigkeit der Welle hat. Selbstverständlich ist nicht zwingend erforderlich, dass eine Heizung vorhanden ist; es ist egal aus welchem Grund das Medium, dessen Füllstand gemessen werden soll, erwärmt ist.

Um den Füllstand zu bestimmen, wird von der Sende- und Empfangseinheit 109 als Messsignal eine elektromagnetische Welle erzeugt, die sich entlang der Messsonde 108, die die elektromagnetische Welle führt, ausbreitet. Ein Teil des Messsignals wird an der Referenzstelle 104 reflektiert, der verbleibende Teil des Messsignals führt zu einer Reflexion an der Oberfläche 110 des Mediums 106 im Behälter 103. Beide reflektierten Signale werden von der Sende- und Empfangseinheit 109 detektiert, wobei die Zeitpunkte der Detektion des an der Oberfläche 110 des Mediums 106 reflektierten Signals und der Detektion des an der mindestens einen Referenzstelle 104 reflektierten Signals, relativ zum Zeitpunkt der Erzeugung der elektromagnetischen Welle gemessen werden.

Die Auswerteeinheit 102 ist durch entsprechende Software und/oder Hardware so ausgestaltet, dass sie aus diesen Zeitmessungen den Füllstand, also die Position der Oberfläche 110 ermittelt, wenn die Position der Referenzstelle 104, genauer gesagt ihr Abstand von der Quelle der elektromagnetischen Welle in der Sende- und Empfangseinheit 109, kalibriert wurde, so dass dieser Abstand als bekannt vorausgesetzt werden kann. Dann kann beispielsweise aus der Laufzeit des an der Referenzstelle 104 reflektierten Signals die Ausbreitungsgeschwindigkeit der elektromagnetischen Welle unter den aktuellen Bedingungen in der Atmosphäre 105 durch die Auswerteeinheit 102 ermittelt werden. Die so ermittelte Ausbreitungsgeschwindigkeit kann dann von der Auswerteeinheit 102 zur Berechnung des Abstands zwischen der Oberfläche 110 des Mediums 106 von der Quelle der elektromagnetischen Welle in der Sende- und Empfangseinheit 109 aus der Laufzeit des an der Oberfläche 110 des Mediums 106 reflektierten Signals genutzt werden.

Das Füllstandmessgerät 101 zeichnet sich dabei dadurch aus, dass die Auswerteeinheit 102 so ausgestaltet ist, dass sie bei der Verarbeitung der Laufzeit eines an der Referenzstelle 104 reflektierten Signals eine Änderung der Geometrie der Referenzstelle 104 in Abhängigkeit von den Umgebungsbedingungen, insbesondere in Abhängigkeit von der Temperatur berücksichtigt.

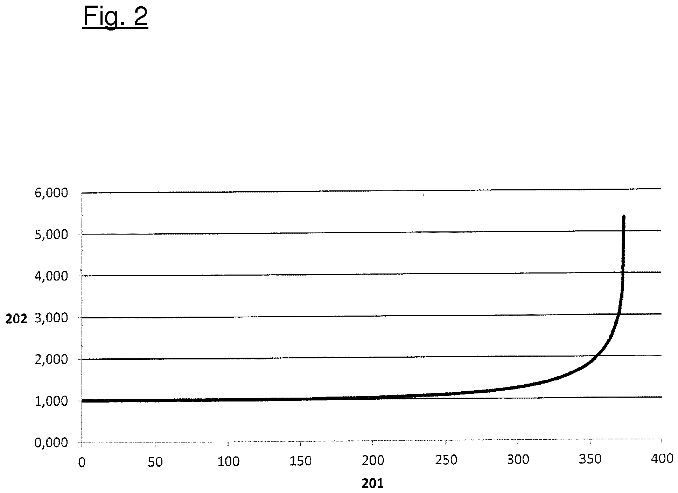

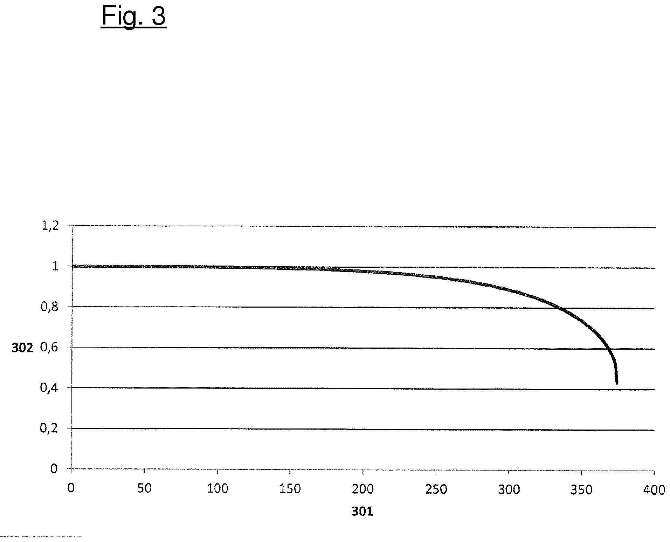

Die Figuren 2 und 3 veranschaulichen den erheblichen Einfluss, den z.B. temperaturbedingte Änderungen von den Bedingungen der Atmosphäre 105 oberhalb des Mediums 106, dessen Füllstand zu bestimmen ist, auf das Ergebnis einer Laufzeitbestimmung haben am Beispiel von gesättigtem Wasserdampf, der in der Prozessindustrie häufig, beispielsweise bei Dampferzeugern von Kraftwerken, auftritt.

Wie die in Figur 2 schematisch dargestellte Abhängigkeit der relativen Permittivität, die auf der Y-Achse 202 dargestellt ist, von gesättigtem Wasserdampf in Abhängigkeit von der Temperatur, die auf der X-Achse 201 in °C dargestellt ist, zeigt, beginnt insbesondere bei Temperaturen oberhalb von 200 °C die relative Permittivität stark zuzunehmen, so dass die Ausbreitungsgeschwindigkeit der elektromagnetischen Welle in der Atmosphäre 105 spürbar reduziert wird. Daraus folgt die Notwendigkeit zu einer spürbaren Korrektur des Ergebnisses der Laufzeitmessung, die durch einen in Figur 3 ebenfalls schematisch auf der Y-Achse 302 dargestellten Korrekturfaktor, der von der auf der X-Achse 301 dargestellten Temperatur, abhängig ist, durch Anwendung auf das Ergebnis einer Laufzeitmessung in einer gesättigten Wasserdampf-Atmosphäre erfolgen kann.

Für das konkret dargestellte Beispiel Wasser als flüssiges Medium 106 und Wasserdampf in der Atmosphäre sind die physikalischen Daten, die in die Figur 2 eingehen, sogenannten Wasserdampftafeln zu entnehmen. Auch für eine Vielzahl andere Medien sind entsprechende Werte Tabellenwerken zu entnehmen; nötigenfalls müssen die entsprechenden Daten gemessen werden.

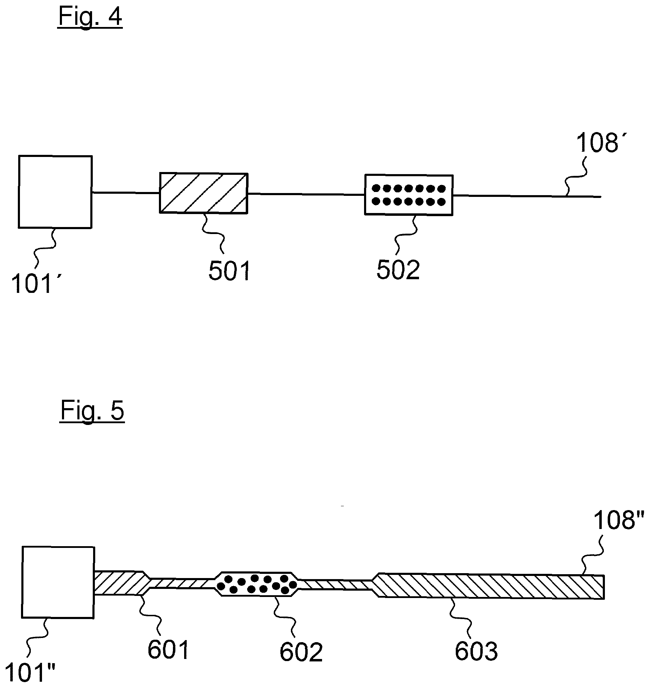

Das in Figur 4 gezeigte Ausführungsbeispiel für einen Füllstandsensor 101', der nach dem TDR-Prinzip arbeitet, unterscheidet sich von dem in Figur 1 gezeigten Füllstandsensor 101 durch die Ausgestaltung seiner Messsonde 108', die zwei Referenzstellen 501 und 502 aufweist, wobei die Referenzstellen 501, 502 unterschiedliche Wärmeausdehnungskoeffizienten haben. Dies wird insbesondere dadurch erreicht, dass sie aus Materialien mit unterschiedlichen Wärmeausdehnungskoeffizienten gefertigt sind, beispielsweise aus Edelstahl mit einem Wärmeausdehnungskoeffizienten $\alpha$ von etwa $17.5*10^{-6}K^{-1}$, und Wolfram einem Wärmeausdehnungskoeffizienten $\alpha$ von etwa $4.5*10^{-6}K^{-1}$, was in den Figuren durch unterschiedliche Schraffur hervorgehoben wird.

Alternativ zu der Ausgestaltung gemäß Figur 4 kann man zur Bereitstellung der Referenzstellen auch, wie bei dem Ausführungsbeispiel für einen gleichfalls nach dem TDR-Prinzip arbeitenden Füllstandsensor 101" gemäß Figur 5, mit Verjüngungen der Messsonde 108" arbeiten, an denen sich der Durchmesser der Messsonde 108" verjüngt. Hier sind wird die Messsonde 108" durch drei aus unterschiedlichem Material gefertigte Bereiche mit Referenzstellen 601,602 und 603 gebildet, wobei die Materialien wieder so gewählt sind, dass sie einen unterschiedlichen Wärmeausdehnungskoeffizienten $\alpha$ aufweisen.

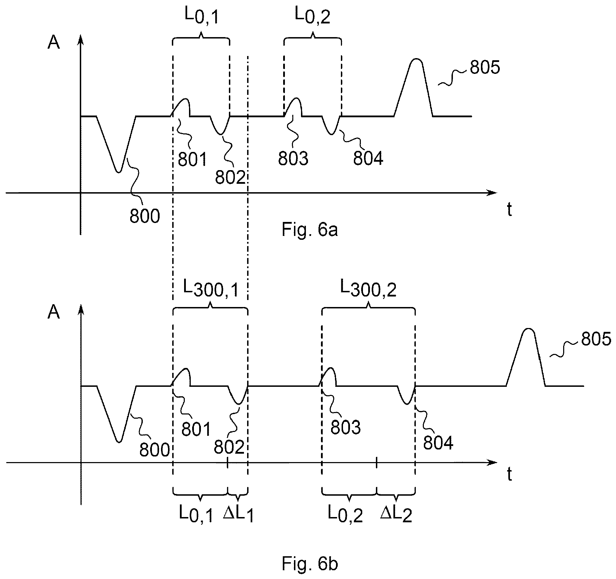

Die Figuren 6a und 6b zeigen schematisch Echokurven, wie sie bei einer Füllstandmessung mit einem wie in Figur 4 dargestellt aufgebauten Füllstandmessgerät bzw. mit einem Füllstandmessgerät mit einer derart aufgebauten Sonde entstehen, wobei die in Figur 6a gezeigte Echokurve eine Messung bei Raumtemperatur repräsentiert und die in Figur 6b gezeigte Echokurve eine Messung bei erhöhter Temperatur (z.B. 300°C)repräsentiert. Die Echokurven entsprechen folglich der empfangenen elektromagnetischen Welle bzw. deren empfangener Amplitude über die Zeit, wie sie nach einer Aufarbeitung z.B. durch die Empfangseinheit der Auswerteeinheit zur Verfügung stehen. Auf der Y-Achse ist dabei jeweils eine Amplitude A eingetragen, auf der X-Achse die Laufzeit. Die Struktur 800 markiert dabei den Nullpunkt des Sensors. Ausgehend hiervon können dann die Laufzeiten bzw. Distanzwerte zu den weiteren Reflexionen, welche durch die Strukturen 801-805 abgebildet werden, ermittelt werden. Abstandsänderungen zwischen den Strukturen 801-805 entsprechen also Laufzeitänderungen. Dabei sind die Auswirkungen der temperaturabhängigen Längenänderung der Materialien zur Veranschaulichung der auftretenden Effekte übertrieben dargestellt

Zunächst soll kurz die Bedeutung der einzelnen Strukturen der Echokurve beispielhaft an Figur 6a erläutert werden: Die Figur 6a ist in diesem Beispiel bei Raumtemperatur aufgezeichnet worden. Die Struktur 800 repräsentiert den Zeitpunkt der Erzeugung der elektromagnetischen Welle. Die Struktur 801 entsteht durch die Reflexion am Anfang der Referenzstelle 501, ist also deren Anfangsecho. Die Struktur 802 ist die Reflexion vom Ende der Störstelle 501, ist also deren Endeecho. Aus der Differenz des zeitlichen Auftretens der Struktur 801 und 802 kann mit einer angenommenen Ausbreitungsgeschwindigkeit die Länge $L_{0,1}$ bestimmt werden. $L_{0,1}$ entspricht der mechanischen Länge der Referenzstelle 501. Die Strukturen 803 und 804 werden entsprechend von Anfang bzw. Ende der der Referenzstelle 502 erzeugt und stellen dementsprechend das Anfangsecho bzw. das Endeecho der zweiten Referenzstelle 502 dar. Auch hier lässt sich die Länge $L_{0,2}$ bestimmen. Die Struktur 805 wird durch die Reflexion an Oberfläche des Füllgutmediums verursacht.

Die Echokurve in Figur 6a ist in diesem Beispiel bei Raumtemperatur aufgezeichnet worden. Hier ist der Abstand der Strukturen 801 und 802 bzw. 803 und 804 voneinander, die durch Reflexionen an Anfang und Ende der jeweiligen Störstellen entstehen, im Vergleich zueinander gleich weit auseinander.

Im laufenden Prozess, bei dem eine heiße Wasser-Dampf-Atmosphäre 105, die beispielsweise 300°C erreicht, vorhanden ist, ändert sich zweierlei: Einerseits verringert sich die Ausbreitungsgeschwindigkeit der elektromagnetischen Welle, was dazu führt, dass alle Abstände zwischen den Strukturen 801 bis 805 größer werden. Hinzu kommt aber, dass sich wegen der thermischen Ausdehnung der Messsonde die jeweilige Position und der Abstand zwischen den Strukturen 801 und 802 bzw. 803 und 804 ändern. Insbesondere ist die Positionsänderung zwischen Anfangsecho 801 und Endeecho 802 der Referenzstelle 501 unterschiedlich stark zum Abstand des Anfangs- 803 und Endeecho 804 der Referenzstelle 502.

Dies zeigt sich auch in Figur 6b. $L_{300,1}$ ist der gemessene Abstand beider Reflexionen der Störstelle 501 bei 300°C und $L_{300,2}$ ist der Abstand beider Reflexionen der Störstelle 502. Hieraus lassen sich nun die Differenzen der selbigen Störstelle über die Temperatur bilden:

$$\Delta L_1 \;=\; L_{300,1} - L_{0,1}$$

$$\Delta L_2 \;=\; L_{300,2} - L_{0,2}$$

Wären die Störstellen aus dem gleichen Material, so würden sich $\Delta L_1$ und $\Delta L_2$ nur im Rahmen der Messgenauigkeit unterscheiden. Da jedoch zur Änderung der Laufzeit in der Atmosphäre auch noch eine unterschiedliche reale Längenänderung der Störstelle hinzukommt, ist im Beispiel aus Figur 6a und 6b hier die Änderung $\Delta L_2$ größer als die Änderung $\Delta L_1$. Die unterschiedliche Längenänderung lässt sich im erfindungsgemäßen Verfahren, wie unter Algorithmus I beschrieben, nutzbringend einsetzen.

Dass die Reflexion 805 der Füllgutoberfläche nun zeitlich später erscheint, ist lediglich der verlängerten Laufzeit des Messsignals zu verschulden. Es erfolgt also nicht nur eine einheitliche Reskalierung der Abstände voneinander, so dass die Anwendung eines einheitlichen Korrekturfaktors zu Fehlern führt.

In der folgenden Beschreibung wird die Änderung des Abstandes zwischen Anfangs- und Endeecho der Störstelle 501 über die Temperatur mit $\Delta L_1$, die von Störstelle 502 mit $\Delta L_2$ bezeichnet.

Zur exemplarischen Veranschaulichung, wie eine Korrektur dieser Effekte durch einen entsprechend eingerichtete Auswerteeinheit 102 erfolgen kann, werden nun zwei beispielhafte Algorithmen dafür beschrieben:

**Algorithmus I**

Algorithmus I setzt erfindungsgemß eine Messsonde, die aus zwei unterschiedlichen Materialien besteht, wie sie z.B. in Figur 4 oder in Figur 5, dargestellt ist, voraus. Er kann aber analog auch auf Messsonden mit mehr Materialien ausgedehnt werden, auch wenn dies zu überbestimmten Gleichungssystemen führt.

Die scheinbare Änderung der Längen $\Delta L_1$ und $\Delta L_2$ auf der Echokurve, wie sie die Auswerteeinheit sieht, setzen sich jeweils aus zwei Teiländerungen zusammen:

$$\Delta L_1 = \Delta L_{Laufzeit\_1} + \Delta L_{Mechanik\_1}$$

$$\Delta L_2 = \Delta L_{Laufzeit\_2} + \Delta L_{Mechanik\_2}$$

$\Delta L_{Mechanik-1}$ und $\Delta L_{Mechanik\_2}$ stammen von der Größenänderung der Referenzstelle aufgrund der Temperaturänderung und sind je nach Materialeigenschaft unterschiedlich groß. $\Delta L_{Mechanik}$ wäre auch ohne Gasatmosphäre im Behälter messbar, da diese Komponente nicht der Signallaufzeit geschuldet ist, sondern direkt der thermischen Ausdehnung des mechanischen Aufbaus.

$\Delta L_{Laufzeit}$ basiert auf der geänderten Signallaufzeit des Messsignals in der Dampfatmosphäre. Hierbei handelt es sich um eine scheinbare Längenänderung der Referenzstelle innerhalb der Echokurve.

Die Längenausdehnung eines Körpers $\Delta L_{Mechanik\_1}$ und $\Delta L_{Mechanik\_2}$ ist eine Funktion, die von der Temperatur abhängt. Einem Fachmann ist dieser Zusammenhang hinreichend bekannt und in der Literatur beschrieben.

$$\Delta L_{Mechanik\_1} = f_1(\Delta T)$$

$$\Delta L_{Mechanik\_2} = f_2(\Delta T)$$

Eine einfache Näherung sieht z.B. folgendermaßen aus:

$$\Delta L_{Mechanik} \approx \alpha \cdot L_0 \cdot \Delta T$$

$\alpha$     *Wärmeausdehnungskoeffizient*
$L_0$     *Länge bei $T_0$*

$$\Delta T = T - T_0 \qquad Temperatur\ddot{a}nderung$$

Selbstverständlich ließe sich mit einer einzelnen Referenzstelle in Kombination mit einer Temperaturmessung und den Formeln zur Wärmeausdehnung auch den mechanischen Fehler berechnen und somit die Messung verbessern, jedoch ist hierfür eine separate Messvorrichtung für die Temperatur nötig, die aber nur dann zu einer exakten Korrektur führen kann, wenn sichergestellt ist, dass der mit einem solchen Temperatursensor gemessene Temperaturwert auch tatsächlich die Temperatur an den entsprechenden Positionen der Messsonde beschreibt, was je nach Anwendung nicht immer der Fall ist.

Mit mehreren (mindestens zwei) Referenzstellen unterschiedlicher Materialeigenschaft erzielt man zu den positiven Effekten mehrerer Referenzstellen auch eine indirekte Temperaturmessung, wenn man ein einfaches Gleichungssystem löst.

$$\Delta T = \frac{\Delta L_1 - \Delta L_2}{\alpha_1 \cdot L_{0,1} - \alpha_2 \cdot L_{0,2}}$$

Hieraus lässt sich die mechanische Ausdehnung berechnen

$$\Delta L_{Mechanik\,1} \approx \alpha_1 \cdot L_{0,1} \cdot \Delta T$$

$$\Delta L_{Mechanik\,2} \approx \alpha_2 \cdot L_{0,2} \cdot \Delta T$$

Und schließlich die um die mechanische Ausdehnung bereinigte Längenänderung

$$\Delta L_{Laufzeit\_1} = \Delta L_1 - \Delta L_{Mechanik\_1}$$

$$\Delta L_{Laufzeit\_2} = \Delta L_2 - \Delta L_{Mechanik\_2}$$

Da $\Delta L_{Laufzeit}$ proportional der geänderten Signallaufzeit des Messsignals in der Dampfatmosphäre ist, kann hieraus ein Korrekturfaktor *k* für die Laufzeit und somit für die Füllstandsposition bestimmt werden:

$$k = \frac{L_{0,1}}{L_{0,1} + \Delta L_{Laufzeit\_1}} = \frac{L_{0,2}}{L_{0,2} + \Delta L_{Laufzeit\_2}}$$

Diese Vorgehensweise kann selbstverständlich auch um ein exakteres Modell ergänzt werden. Bei nichtlinearen Modellen sind dann nichtlineare Lösungsansätze erforderlich um auf die Temperaturänderung $\Delta T$ zu schließen. Die durchgeführten Berechnungen sowie die Näherungen sind nur beispielhafter Natur und dienen zur Veranschaulichung der Praxisnähe des erfindungsgemäßen Verfahrens.

**Algorithmus II**

Algorithmus II kann nicht-erfindungsgemäß im Gegensatz zu Algorithmus I mit herkömmlichen Sonden aus einem Material arbeiten. Hier ist jedoch ein Modell der umgebenden Atmosphäre nötig, wie es für Wasserdampf in Figur 2 und Figur 3 gezeigt wird.

Die scheinbare Änderung der Länge $\Delta L_1$ einer Referenzstelle auf der Echokurve setzt sich jeweils aus zwei Teiländerungen zusammen:

$$\Delta L_1 = \Delta L_{Laufzeit\_1} + \Delta L_{Mechanik\_1}$$

Auch hier gilt:

$$\Delta L_{Mechanik\_1} = f_1(\Delta T)$$

D.h. die Änderung der Mechanik ist durch eine temperaturabhängige Funktion, die einem Fachmann bekannt ist, beschrieben.

Ist die Stoffeigenschaft des zu messenden Mediums und damit der überlagerten Gasphase bekannt, so lässt sich dies auch in einer Funktion beschreiben. Z.B. für Wasserdampf ändert sich die Signallaufzeit laut den Wasserdampftafeln entsprechend den Figuren 2 und 3 (Hier ist die Permittivität des Wasserdampfs dargestellt, die Einfluss auf die Lichtgeschwindigkeit hat).

$$\Delta L_{Laufzeit} = f_{Stoffeigenschaft}(\Delta T)$$

Daraus folgt:

$$\Delta L_1 = f_1(\Delta T) + f_{Stoffeigenschaft}(\Delta T)$$

Da beide Funktionen nur von der Temperatur abhängen, ist eine Lösung der Gleichung zu erzielen. Als Lösungsansätze seien der Vollständigkeit das analytisches Auflösen oder der numerischen Ansatz (Nullstellensuche nach Newton) erwähnt.

Mit der errechneten Temperatur kann dann die rein mechanische Ausdehnung gemäß dem Zusammenhang

$$\Delta L_{Mechanik\_1} = f_1(\Delta T)$$

erfasst und so der systematische Fehler der Mechanik nach dem Schema aus Algorithmus I kompensiert werden.

Bezugszeichenliste

101, 101', 101''     Füllstandmessgerät

| 102 | Auswerteeinheit |
| 103 | Behälter |
| 104, 501, 502 | Referenzstelle |
| 105 | Atmosphäre |
| 106 | Medium |
| 107 | Heizung |
| 108, 108', 108" | Messsonde |
| 109 | Sende- und Empfangseinheit |
| 110 | Oberfläche |
| 201, 301 | X-Achse |
| 202, 302 | Y-Achse |
| 601, 602, 603 | Referenzstelle |
| 800-805 | Strukturen (der Echokurve) |

**Patentansprüche**

1. Füllstandmessgerät (101, 101', 101") ausgeführt zur Messung eines Füllstands eines Mediums (106) in Anwesenheit einer die Laufzeit elektromagnetischer Wellen beeinflussenden Atmosphäre (105) mittels einer elektromagnetischen Welle nach einem Laufzeitprinzip mit

   - einer Auswerteeinheit (102),
   - einer Sende- und Empfangseinheit (109) zum Senden und Empfangen elektromagnetischer Wellen,
   - mindestens einer Messsonde (108, 108', 108"), und
   - einer ersten Referenzstelle (501, 601),

   **dadurch gekennzeichnet, dass** das Füllstandmessgerät mindestens eine zweite Referenzstelle (502, 602, 603) aufweist, die aus einem Material mit einem unterschiedlichen Ausdehnungskoeffizienten in Abhängigkeit von der Umgebungstemperatur als das Material der ersten Referenzstelle besteht,

   wobei die Auswerteeinheit (102) so eingerichtet ist, dass sie bei der Verarbeitung der Laufzeit eines an den Referenzstellen reflektierten Signals eine Änderung der Geometrien der Referenzstellen in Abhängigkeit von der Umgebungstemperatur berücksichtigt, indem sie aus den gemessenen Änderungen der Laufzeit bedingt durch eine Änderung der Geometrien der mindestens zwei Referenzstellen durch Lösung eines Gleichungssystems einen Wert für die aktuell vorliegende Umgebungstemperatur ermittelt und eine darauf basierende Korrektur für die Füllstandmessung durchführt.

2. Verfahren zur Füllstandmessung mit einem Füllstandmessgerät nach Anspruch 1 mit den Schritten

   - Aussenden einer elektromagnetischen Welle durch eine Atmosphäre (105) hindurch in Richtung auf eine Oberfläche (110) eines Mediums (106), dessen Füllstand gemessen wird,
   - Empfangen von Echos einer ersten Referenzstelle (501, 601) und mindestens einer zweiten Referenzstelle (502, 602, 603), die aus einem Material mit einem unterschiedlichen Ausdehnungskoeffizienten in Abhängigkeit von der Umgebungstemperatur als das Material der ersten Referenzstelle besteht und Registrierung der Laufzeit dieser Echos,
   - Empfangen eines Echos der Oberfläche (110) des Mediums (106), dessen Füllstand gemessen wird und Registrierung der Laufzeit dieses Echos, und
   - Bestimmung des Füllstands durch Auswertung der registrierten Laufzeiten der Echos, unter Berücksichtigung eines Korrekturfaktors zur Berücksichtigung der Auswirkungen der Atmosphäre (105) auf die Laufzeit der elektromagnetischen Welle, wobei

   bei der Bestimmung des zu berücksichtigenden Korrekturfaktors der Einfluss einer Änderung der Geometrien der Referenzstellen in Abhängigkeit von der Umgebungstemperatur berücksichtigt wird, indem zur Bestimmung der Änderung der Geometrien der Referenzstellen in Abhängigkeit von der Umgebungstemperatur die Echos der ersten und der zweiten Referenzstellen, deren Geometrie sich unterschiedlich in Abhängigkeit von der Umgebungstemperatur ändert, empfangen und die Laufzeiten dieser Echos registriert werden und dass aus diesen Laufzeiten durch Lösung eines Gleichungssystems ein Wert für die aktuell vorliegende Umgebungstemperatur ermittelt und eine darauf basierende Korrektur für die Füllstandmessung durchgeführt wird.

## Claims

**1.** A filling level measuring device (101, 101', 101") configured for measuring a filling level of a medium (106) in the presence of an atmosphere (105) affecting the propagation time of electromagnetic waves by means of an electromagnetic wave in accordance with a propagation time principle, comprising:

- an evaluation unit (102),
- a transmitting and receiving unit (109) for transmitting and receiving electromagnetic waves,
- at least one measuring probe (108, 108', 108"), and
- a first reference point (501, 601),

**characterized in that**
the filling level measuring device has at least one second reference point (502, 602, 603) consisting of a material with a different expansion coefficient depending on the ambient temperature than the material of the first reference point,
wherein the evaluation unit (102) is configured such that, when processing the propagation time of a signal reflected at the reference points, it takes into account a change in the geometries of the reference points depending on the ambient temperature by determining, from the measured changes in the propagation time caused by a change in the geometries of the at least two reference points, a value for the currently prevailing ambient temperature through solving a system of equations, and performing a correction of the filling level measurement, which is based thereon.

**2.** A method for measuring the filling level with a filling level measuring device according to claim 1, with the steps

- emitting an electromagnetic wave through an atmosphere (105) in the direction towards a surface (110) of a medium (106) whose filling level is being measured,
- receiving echoes of a first reference point (501, 601) and at least one second reference point (502, 602, 603) consisting of a material with a different expansion coefficient depending on the ambient temperature than the material of the first reference point, and registering the propagation time of these echoes,
- receiving an echo of the surface (110) of the medium (106) whose filling level is being measured and registering the propagation time of this echo, and
- determining the filling level by evaluating the registered propagation times of the echoes, taking into account a correction factor for taking into account the effects of the atmosphere (105) on the propagation time of the electromagnetic wave, wherein,
when determining the correction factor to be taken into account, the influence of a change in the geometries of the reference points depending on the ambient temperature is taken into account by receiving the echoes of the first and second reference points, whose geometry changes differently depending on the ambient temperature, for determining the change in the geometries of the reference points, and by registering the propagation times of these echoes, and that from these propagation times a value for the currently prevailing ambient temperature is determined through solving a system of equations, and a correction of the filling level measurement, which is based thereon, is performed.

## Revendications

**1.** Appareil de mesure de niveau de remplissage (101, 101', 101") conçu pour la mesure d'un niveau de remplissage d'un milieu (106) en présence d'une atmosphère (105) influençant le temps de propagation d'ondes électromagnétiques au moyen d'une onde électromagnétique selon un principe de temps de propagation avec

- une unité d'évaluation (102),
- une unité d'émission et de réception (109) pour envoyer et recevoir des ondes électromagnétiques,
- au moins une sonde de mesure (108, 108', 108"), et
- un premier emplacement de référence (501, 601),

**caractérisé en ce**
**que** l'appareil de mesure de niveau de remplissage présente au moins un deuxième emplacement de référence (502, 602, 603) qui se compose d'un matériau avec un coefficient de dilatation différent en fonction de la température ambiante en tant que matériau par rapport au matériau du premier emplacement de référence,
dans lequel l'unité d'évaluation (102) est étudiée de manière à ce qu'elle tienne compte, lors du traitement du temps de propagation d'un signal réfléchi aux emplacements de référence, d'une variation des géométries des emplacements de référence en fonction de la température ambiante **en ce qu'**elle détermine, à partir des variations mesurées du temps de propagation du fait d'une variation des géométries des au moins deux emplacements de référence, par résolution d'un système d'équations, une valeur pour la température ambiante existant actuellement, et réalise une correction basée là-dessus pour la mesure du niveau de remplissage.

**2.** Procédé pour la mesure du niveau de remplissage avec un appareil de mesure de niveau de remplissage selon la revendication 1 avec les étapes suivantes :

- l'émission d'une onde électromagnétique à travers une atmosphère (105) en direction d'une surface (110) d'un milieu (106) pour lequel le niveau de remplissage est mesuré,
- la réception d'échos d'un premier emplacement de référence (501, 601) et au moins d'un deuxième emplacement de référence (502, 602, 603) qui se compose d'un matériau avec un coefficient de dilatation différent en fonction de la température ambiante par rapport au matériau du premier emplacement de référence, et l'enregistrement du temps de propagation de ces échos,
- la réception d'un écho de la surface (110) du milieu (106) pour lequel le niveau de remplissage est mesuré et l'enregistrement du temps de propagation de cet écho, et
- la détermination du niveau de remplissage par évaluation des temps de propagation enregistrés des échos en tenant compte d'un facteur de correction afin de tenir compte des effets de l'atmosphère (105) sur le temps de propagation de l'onde électromagnétique, dans lequel,
lors de la détermination du facteur de correction à prendre en compte, il est tenu compte de l'influence d'une variation des géométries des emplacements de référence en fonction de la température ambiante en ce que, pour la détermination de la variation des géométries des emplacements de référence en fonction de la température ambiante, les échos du premier et deuxième emplacement de référence dont la géométrie varie différemment en fonction de la température ambiante sont réceptionnés et les temps de propagation de ces échos sont enregistrés et en ce qu'à partir de ces temps de propagation, par résolution d'un système d'équations, une valeur pour la température ambiante existant actuellement est déterminée et une correction basée là-dessus est réalisée pour la mesure du niveau de remplissage.

Fig. 1

## Fig. 2

## Fig. 3

Fig. 4

101´     501     502     108´

Fig. 5

101"     601     602     603     108"

Fig. 6a

Fig. 6b

**IN DER BESCHREIBUNG AUFGEFÜHRTE DOKUMENTE**

**In der Beschreibung aufgeführte Patentdokumente**

- WO 2010071564 A
- US 20090282892 A1